# FASCICULE DE BREVET EUROPEEN

(11) **EP 2 852 486 B1**
(45) Date de publication et mention de la délivrance du brevet: **06.07.2016**
(21) Numéro de dépôt: 13723144.5
(22) Date de dépôt: 16.05.2013
(51) Int. Cl.: B29C 49/42, B29C 31/00, B29C 49/28

(54) **INSTALLATION POUR LA FABRICATION DE RÉCIPIENTS COMPORTANT UN ROBOT AGENCÉ POUR INTERVENIR SUR AU MOINS DEUX UNITÉS**
BEHÄLTER FERTIGUNGSANLAGE MIT EINEM ROBOTER IN EINER POSITIONIERUNG FÜR DEN BETRIEB VON MINDESTENS ZWEI EINHEITEN
CONTAINER MANUFACTURING PLANT COMPRISING A ROBOT POSITIONED TO OPERATE ON AT LEAST TWO UNITS

(30) Priorité: 21.05.2012 FR 1254610
(43) Date de publication de la demande: 01.04.2015
(73) Titulaire: Sidel Participations, 76930 Octeville sur Mer (FR)
(72) Inventeur: CIRETTE, Damien, F-76930 Octeville sur Mer (FR); MEUNIER, Eric, F-76930 Octeville sur Mer (FR); BISCHOFF, Denis, F-76930 Octeville sur Mer (FR); AUGER, Julien, F-76930 Octeville sur Mer (FR)
(74) Mandataire: Siloret, Patrick
(86) Numéro de dépôt international: PCT/EP2013/060137
(87) Numéro de publication internationale: WO 2013/174711

(56) Documents cités:
- US-A1- 2011 052 744
- US-B2- 8 033 809

## Description

La présente invention concerne une installation pour la fabrication de récipients comportant un robot agencé pour intervenir sur au moins deux unités de l'installation.

La présente invention concerne plus particulièrement une installation pour la fabrication de récipients à partir de préformes en matière thermoplastique, ladite installation comportant au moins :
- une première unité pour le conditionnement thermique des préformes qui comporte une première face latérale verticale ; et
- une deuxième unité pour le façonnage des récipients à partir desdites préformes conditionnées thermiquement dans la première unité, qui comporte une deuxième face latérale verticale.

On connaît de l'état de la technique de telles installations de fabrication de récipients, en particulier de bouteilles en matière thermoplastique, comportant successivement au moins deux unités respectivement de conditionnement thermique et de façonnage, notamment par l'injection au moins d'un fluide sous pression.

D'une manière générale, on recherche à réduire la durée pendant laquelle l'installation est en mode de fonctionnement, dit d'intervention, afin de permettre la mise en oeuvre notamment d'opérations de maintenance ou de changement d'outillages, tels que les moules.

Tel sera notamment le cas pour lancer la fabrication d'un nouveau récipient. En effet, il est alors nécessaire de procéder à différentes opérations de changement de certains des moyens qui sont associés à une préforme donnée, correspondant elle-méme à un récipient à fabriquer bien déterminé. Le document US-A-2011052744 décrit une installation pour la fabrication de récipients selon le préambule de la revendication 1.

Cependant, une telle solution n'était pas satisfaisante car la durée totale nécessaire à la réalisation des telles opérations est particulièrement longue et par conséquent coûteuse dès lors que cesse généralement toute fabrication.

Pour y remédier la Demanderesse a développé tout un ensemble de solutions nouvelles pour automatiser les actions ou manipulations qui étaient jusqu'alors réalisées manuellement par au moins un opérateur.

La Demanderesse propose ainsi une installation de fabrication dans laquelle sont automatisées les opérations nécessaires à la réalisation d'un changement des moules.

Dans le cadre du développement de ces solutions, la Demanderesse a recherché à optimiser tant l'utilisation des moyens mis en oeuvre pour automatiser des opérations que leur intégration dans l'installation, et ce afin d'en préserver notamment l'encombrement général par rapport à l'implantation industrielle.

Le but de la présente invention est notamment de proposer une nouvelle conception d'installation intégrant des moyens d'automatisation de certaines opérations.

Dans ce but, l'invention propose une installation du type décrit précédemment, caractérisée en ce que l'installation comporte au moins un robot qui est agencé en regard de la première face latérale verticale et en regard de la deuxième face latérale verticale pour intervenir sélectivement à travers la première face latérale verticale et/ou à travers la deuxième face latérale verticale afin de réaliser des opérations sur la première unité et/ou la deuxième unité.

Avantageusement, ledit au moins un robot est agencé entre la première unité et la deuxième unité, juxtaposé auxdites première et deuxième unités.

Grâce à un tel agencement, le robot est notamment - mais pas exclusivement - apte à intervenir sur l'une et l'autre desdites unités, en particulier pour effectuer des opérations telles que des changements d'outillages ou de la maintenance.

Avantageusement, la compacité générale de l'installation est maintenue grâce à l'implantation dudit au moins un robot dans une zone d'implantation qui, proximale, est attenante auxdites première et deuxième unités.

Selon d'autres caractéristiques de l'invention :
- ledit au moins un robot comporte au moins des premiers moyens pour assister des opérations de changement de moyens de support des préformes appartenant à la première unité ;
- ledit au moins un robot comporte au moins des deuxièmes moyens pour assister des opérations de changement de moyens de moulage appartenant à la deuxième unité ;
- ledit au moins un robot comporte un bras articulé qui est mobile dans l'espace suivant un trièdre ;
- lesdits premiers moyens et/ou les deuxièmes moyens dudit au moins un robot sont commandés sélectivement pour réaliser automatiquement lesdites opérations de changement des moyens de moulage et/ou lesdites opérations de changement des moyens de support des préformes ;
- la première face latérale verticale et de la deuxième face latérale verticale s'étendent dans le prolongement l'une de l'autre ;
- la première face latérale verticale est la face externe de l'une des parois verticales d'une enceinte entourant ladite première unité et la première face latérale verticale comporte des moyens d'obturation qui sont montés mobiles entre une position fermée et une position ouverte, pour dégager sélectivement au moins une ouverture permettant l'intervention dudit au moins un robot sur la première unité ;
- la deuxième face latérale verticale est la face externe de l'une des parois verticales d'une enceinte entourant ladite deuxième unité et la deuxième face latérale verticale comporte des moyens d'obturation qui sont montés mobiles entre une position fermée et une position ouverte pour dégager

sélectivement au moins une ouverture permettant l'intervention dudit au moins un robot sur la deuxième unité ;
- ledit au moins un robot est implanté dans une zone délimitée par une enceinte, ladite enceinte comportant au moins lesdites parois qui comportent respectivement la première face latérale verticale et la deuxième face latérale verticale ;
- ledit au moins un robot est apte à se déplacer en regard de la première face latérale verticale et/ou de la deuxième face latérale verticale.

D'autres caractéristiques et avantages de la présente invention apparaîtront à la lecture de la description détaillée qui va suivre pour la compréhension de laquelle on se reportera aux dessins dans lesquels :
- la figure 1 est une vue de dessus qui représente schématiquement une installation conforme à l'état de la technique comportant une première unité et une deuxième unité et au moins un robot agencé conformément aux enseignements de l'invention ;
- les figures 2 et 3 sont respectivement une vue de dessus et une vue en perspective qui représentent partiellement l'installation schématisée sur la figure 1 et qui illustrent un exemple d'utilisation du robot implanté en regard desdites faces pour intervenir sur la deuxième unité et réaliser automatiquement des opérations de changement de moule.

Dans la suite de la description, on adoptera à titre non limitatif les orientations longitudinale, transversale et verticale en référence au trièdre (X, Y, Z) représenté sur les figures.

On utilisera également à titre non limitatif les termes "avant" et "arrière" en référence à l'orientation longitudinale, ainsi que "supérieur" et "inférieur" en référence à l'orientation verticale et enfin "gauche" ou "droite" en référence à l'orientation transversale.

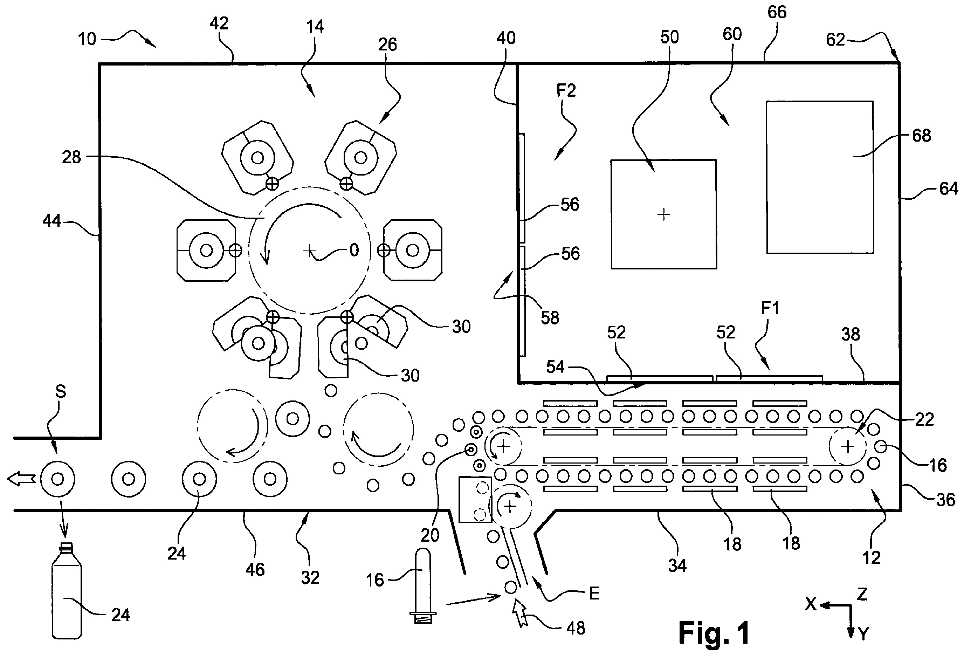

On a représenté schématiquement à la figure 1 un exemple d'installation 10 de fabrication de récipients comportant au moins une première unité 12 pour le conditionnement thermique des préformes puis une deuxième unité 14 pour le façonnage des récipients.

La première unité 12 pour le conditionnement thermique des préformes 16 en matière thermoplastique est par exemple constituée par un four présentant un parcours de chauffe en "U".

Le four 12 comporte des moyens 18 de chauffage, tels que des lampes infrarouge, qui sont disposés le long d'au moins une partie du parcours et qui sont associés à des moyens de refroidissement (non représentés) du corps et/ou du col des préformes.

Dans un tel four 12, les préformes 16 sont temporairement transportées par des moyens 20 de support (encore appelés "tournette") qui coopèrent avec le col des préformes et qui sont liés en déplacement à un dispositif 22 de transport.

On se reportera par exemple au document WO-00/48819 pour de plus amples détails sur de tels moyens de support.

Le dispositif 22 de transport comporte par exemple au moins une courroie formant une boucle fermée sur laquelle sont rapportées à fixation les moyens 20 de support des préformes 16.

Les préformes 16 se déplacent ainsi de l'entrée du four 12 jusqu'à sa sortie en suivant ledit parcours de chauffe, et en étant de préférence entraînées en rotation sur elle-même par les moyens 20 de support, autour de leur axe principal d'orientation verticale.

Au moins une partie des moyens 20 de support est donc complémentaire des préformes 16 et notamment des caractéristiques géométriques du col.

Or chaque préforme 16 correspond à un récipient 24 donné, à chaque récipient à fabriquer sa préforme.

C'est la raison pour laquelle, lorsque l'on souhaite changer le type de récipient fabriqué, il est généralement nécessaire de procéder à des opérations de démontage d'une partie des moyens 20 de support en place afin de monter de nouveaux moyens 20 de support.

De la même manière, dans la deuxième unité 14 pour le façonnage des récipients 24 à partir des préformes 16, des opérations sont requises lorsque l'on souhaite notamment changer de type de récipient.

La deuxième unité 14 représentée sur la figure 1 correspond à une machine de type rotative (encore appelée "souffleuse") qui n'en constitue cependant qu'un exemple non limitatif.

La deuxième unité 14 comporte des dispositifs 26 de moulage qui sont répartis circonférentiellement de manière régulière à la périphérie d'un carrousel 28 destiné à être entraîné en rotation autour d'un axe O.

Chaque dispositif 26 de moulage comporte des moyens 30 de moulage et des moyens de soufflage ou d'étirage-soufflage associés (non représentés).

Les moyens 30 de moulage comportent un moule comportant au moins deux éléments de moule dans lesquels est réalisée en creux l'empreinte de moulage du récipient à fabriquer, lesdits éléments de moule étant chacun fixés de manière démontable à un porte-moule associé.

Les moyens 30 de moulage comportent généralement un fond de moule séparé formant un troisième élément de moule.

Le dispositif 26 de moulage, ici du type "en portefeuille", est susceptible d'occuper une position ouverte dans laquelle une préforme 16 est introduite ou un récipient 24 extrait et une position fermée occupée lors du façonnage.

Ainsi lorsque l'on souhaite notamment lancer la fabrication d'un nouveau récipient, il est alors nécessaire de procéder à des opérations de changement des moyens 30 de moulage des dispositifs 26 de moulage de la deuxième unité 14.

Avantageusement, l'installation 10 comporte une enceinte 32 comportant une partie entourant la première unité 12 et une autre entourant la deuxième unité 14, ladite enceinte 32 étant en particulier destinée à les isoler de l'environnement extérieur.

De préférence, l'enceinte 32 est associée à des moyens d'insufflation d'air filtré afin d'établir une surpression à l'intérieur de l'enceinte et de contrôler la qualité de l'air.

L'enceinte 32 comporte, autour de la première unité 12 de conditionnement thermique, une paroi 34 verticale d'orientation longitudinale qui, adjacente au tronçon aller du parcours de chauffe en « U », se prolonge par une paroi 36 verticale d'orientation transversale, elle-même prolongée par une paroi 38 verticale d'orientation longitudinale qui est globalement parallèle à la paroi 34 et adjacente au tronçon de retour du parcours de chauffe.

L'enceinte 32 comporte principalement, autour de la deuxième unité 14 de façonnage, une paroi 40 verticale d'orientation transversale qui prolonge la paroi 38 associée à la première unité 12. La paroi 40 se prolonge elle-même par une paroi 42 verticale d'orientation longitudinale et encore une paroi 44 verticale d'orientation transversale.

L'enceinte 32 comporte, transversalement à l'opposé de la paroi 42, une paroi 46 verticale d'orientation longitudinale adjacente à des dispositifs de transfert (ou roues) destinés à assurer, d'une part, le transfert des préformes 16 conditionnées thermiquement depuis la sortie du four 12 jusqu'aux dispositifs 26 de moulage de la deuxième unité 14 (encore appelée « souffleuse ») et, d'autre part, le transfert des récipients 24 fabriqués vers la sortie S de l'installation 10.

Une entrée E est encore ménagée dans l'enceinte 32 entre les parois 34 et 46 afin de permettre l'alimentation en préformes 16 de la première unité 12 par un dispositif 48 d'alimentation représenté schématiquement par une flèche sur la figure 1.

Les opérations précitées, depuis le changement des moyens 20 de support équipant la première unité 12 au changement des moyens 30 de moulage de la deuxième unité 14, étaient jusqu'alors réalisées manuellement par un ou des opérateurs.

Cependant, une telle solution n'était pas satisfaisante car la durée totale nécessaire à la réalisation des telles opérations était particulièrement longue et par conséquent coûteuse.

C'est la raison pour laquelle, la Demanderesse a développé des solutions nouvelles pour automatiser de nombreuses opérations nécessaires au fonctionnement de l'installation 10 et plus particulièrement - mais non exclusivement - les opérations des changements d'outillages tels que les moyens 30 de moulage d'un dispositif 26 de moulage.

Conformément à l'invention, l'installation 10 comporte au moins un robot 50 qui est agencé en regard d'une première face F1 latérale verticale de la première unité 12 et en regard d'une deuxième face F2 latérale verticale de la deuxième unité 14 pour intervenir sélectivement à travers la première face latérale verticale et/ou à travers la deuxième face latérale verticale.

Avantageusement, ledit au moins un robot 50 est apte à réaliser des opérations sur la première unité 12 et/ou la deuxième unité 14.

Grâce à un tel agencement, le robot 50 est susceptible d'intervenir sélectivement tant sur la première unité 12 que sur la deuxième unité 14 dès lors que toutes deux sont dans le rayon d'action dudit robot 50 représenté schématiquement par un carré sur la figure 1.

Avantageusement, ledit au moins un robot 50 est en particulier apte à réaliser des opérations sur la première unité 12 et sur la deuxième unité 14.

Avantageusement, la première face F1 latérale verticale et de la deuxième face F2 latérale verticale s'étendent dans le prolongement l'une de l'autre.

Avantageusement, la première face F1 latérale verticale est la face externe de l'une 38 des parois verticales de l'enceinte 32 entourant ladite première unité 12.

La paroi 38 verticale d'orientation longitudinale est adjacente au tronçon de retour des préformes 16 sur le parcours de chauffe en « U », avant leur transfert vers la deuxième unité 14 de façonnage des préformes 16.

Avantageusement, la première face F1 latérale verticale comporte des moyens 52 d'obturation qui sont montés mobiles entre une position fermée et une position ouverte, pour dégager sélectivement au moins une ouverture 54 permettant l'intervention dudit au moins un robot 50 sur la première unité 12.

De préférence, les moyens 52 d'obturation sont constitués par au moins deux portes qui s'escamotent, de la position fermée vers la position ouverte, par coulissement le long de la paroi 38 afin de libérer l'accès par l'ouverture 54.

En variante, chaque porte des moyens 52 d'obturation est montée pivotante autour d'un axe d'orientation vertical.

Avantageusement, la deuxième face F2 latérale verticale est la face externe de l'une 40 des parois verticales de la partie de l'enceinte 32 entourant ladite deuxième unité 14.

La première face F1 latérale verticale de la paroi 38 de l'enceinte 32 entourant la première unité 12 et la deuxième face F2 latérale verticale de la paroi 40 de l'enceinte 32 entourant la deuxième unité 14 s'étendent dans le prolongement l'une de l'autre, la paroi 38 étant contiguë à la paroi 40.

Tel qu'illustré sur la figure 1, la paroi 38 et la paroi 40 de l'enceinte 32 sont globalement orthogonales. Toutefois, l'enceinte 32 selon la figure 1 n'est qu'un exemple non limitatif et l'angle formé par l'intersection des parois 38 et 40 comportant lesdites faces F1 et F2 est aussi fonction de l'agencement de la première unité 12 par rapport à la deuxième unité 14.

La première face F1 latérale verticale de la paroi 38 et la deuxième face F2 latérale verticale de la paroi 40 s'étendent dans le prolongement l'une de l'autre et déterminent à leur intersection un angle donné.

De préférence, l'angle entre les faces F1 et F2 qui est situé du côté de la zone d'implantation du robot 50 est un angle droit, soit à 90°. En variante, l'angle entre les faces F1 et F2 est inférieur ou égal à 180° et par exemple d'une valeur de 60° ou 120° selon l'agencement desdites unités 12 et 14 non alignées entre elles.

Avantageusement, la deuxième face F2 latérale verticale comporte des moyens 56 d'obturation qui sont montés mobiles entre une position fermée et une position ouverte pour dégager sélectivement au moins une ouverture 58 permettant l'intervention dudit au moins un robot 50 sur la deuxième unité 14.

Les moyens 56 d'obturation sont par exemple réalisés sous la forme de portes, ayant par exemple des cinématiques d'ouverture/fermeture analogues à celles décrites précédemment pour les moyens 52 d'obturation.

Avantageusement, la commande des moyens 52 d'obturation et/ou des moyens 56 d'obturation est réalisée automatiquement au moyen d'actionneurs associés pour déplacer sélectivement lesdits moyens 52, 56 d'obturation entre les positions ouverte et fermée.

Avantageusement, ledit au moins un robot 50 est implanté dans une zone 60 délimitée par une enceinte 62 secondaire comportant au moins une paroi 62 verticale d'orientation transversale et une paroi 64 verticale d'orientation longitudinale.

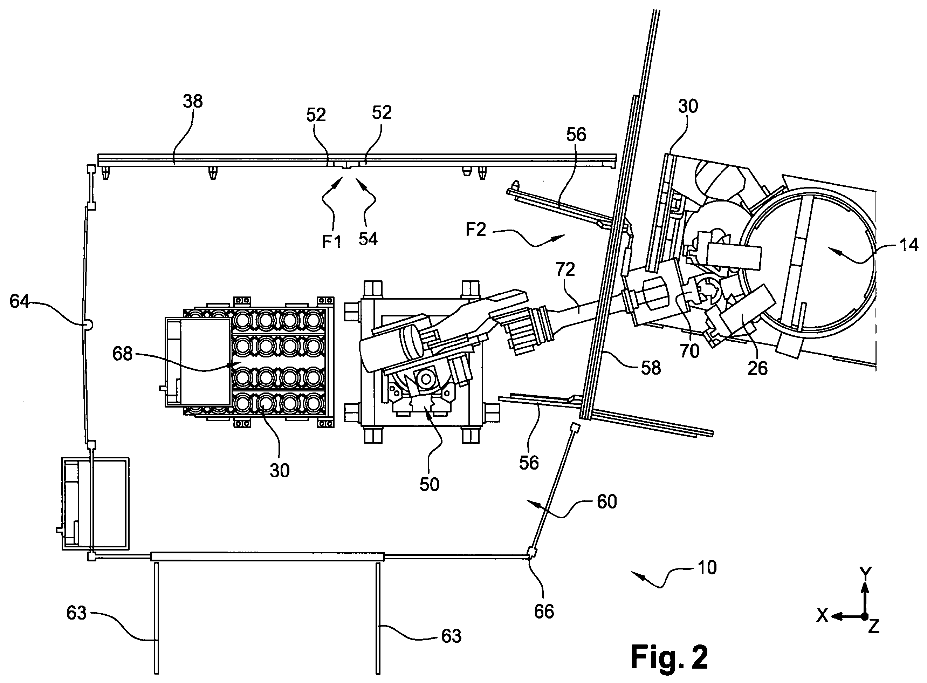

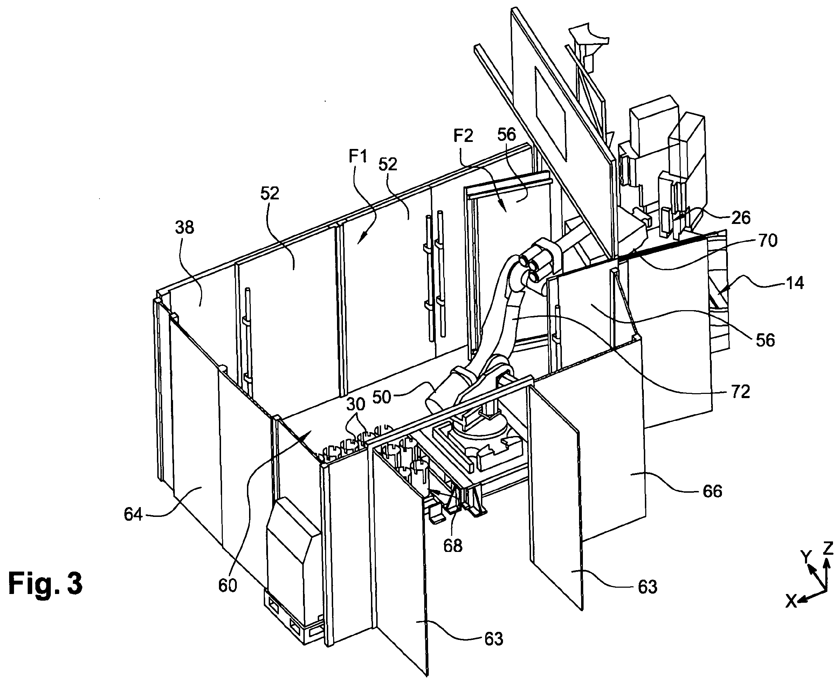

Avantageusement, l'une desdites parois 62, 64 comporte une porte 63 pour permettre d'accéder à la zone 60 et qui est plus particulièrement visible sur les figures 2 et 3.

Par commodité, on a représenté la porte 63 en position ouverte afin notamment de rendre visible ladite zone 60 sur la figure 3, on comprendra cependant que la porte 63 est avantageusement fermée lorsque le robot 50 est en cours d'intervention, par exemple sur l'une ou l'autre desdites unités 12, 14.

L'enceinte 62 délimitant la zone 60 comporte encore lesdites parois 38 et 40 de l'enceinte 32 de l'installation 10, c'est à dire les parois qui comportent respectivement la première face F1 latérale verticale et la deuxième face F2 latérale verticale.

L'enceinte 62 pourrait ne pas comporter les parois 64, 66 qui ont à tout le moins pour fonction de délimiter un périmètre de sécurité autour du robot 50 de manière à contrôler l'accès à la zone 60 et ce faisant éviter tout accident avec le robot 50 en fonctionnement.

Avantageusement, l'enceinte 62 permet de confiner la zone 60 et est associée à des moyens d'insufflation d'air filtré de manière à contrôler la qualité de l'air environnant le robot 50.

En contrôlant la qualité de l'air dans la zone 60 comme dans au moins l'une desdites première et deuxième unités 12, 14, on évite tout risque de contamination des unités 12 ou 14 par des agents pathogènes (bactéries, virus, champignons, etc.) qui, présents dans la zone 60, pourraient s'y introduire par les ouvertures 54 ou 58.

De préférence, le robot 50 est ici fixé au sol de la zone 60.

En variante, ledit au moins un robot 50 est apte à se déplacer en regard de la première face F1 latérale verticale et/ou de la deuxième face F2 latérale verticale.

Selon cette variante, le robot 50 est par exemple monté sur un chariot mobile pouvant se déplacer dans la zone 60 d'implantation.

Avantageusement, des moyens 68 de stockage de type magasin sont également disposés avec le robot 50 dans la zone 60 et comportent des outillages par exemple des moyens 30 de moulage et/ou des moyens 20 de support destinés à être changés.

De préférence, l'installation 10 comporte un seul robot 50 agencé en regard desdites faces F1, F2 dans la zone 60, en variante deux robots 50.

Avantageusement, le robot 50 est donc utilisé pour réaliser différentes opérations, notamment sur l'une et/ou l'autre desdites unités 12, 14.

Avantageusement, ledit au moins un robot 50 comporte au moins des premiers moyens (non représentés) pour assister des opérations de changement de moyens 20 de support des préformes 16 appartenant à la première unité 12.

A titre d'exemple non limitatif, on se reportera à la demande de brevet FR n° 1251155 de la Demanderesse déposée le 08/02/2012 qui décrit et représente un organe de préhension de récipients correspondant au moyen 20 de support précité et comportant un nez démontable équipé d'un mandrin et d'un plateau d'éjection.

Avantageusement, ledit au moins un robot 50 comporte au moins des deuxièmes moyens 70 pour assister des opérations de changement de moyens 30 de moulage appartenant à la deuxième unité 14.

A titre d'exemple non limitatif, on se reportera au document PCT/EP2012/053881 qui décrit et représente de tels moyens 70 notamment aptes à assurer la préhension et le transport de moyens 30 de moulage.

De préférence, lesdits premiers moyens et/ou les deuxièmes moyens 70 dudit au moins un robot 50 sont commandés sélectivement pour réaliser automatiquement lesdites opérations de changement des moyens 30 de moulage et/ou lesdites opérations de changement des moyens 20 de support des préformes 16.

Avantageusement, ledit robot 50 comporte un bras 72 articulé qui est mobile dans l'espace suivant un trièdre (X, Y, Z).

De préférence, l'extrémité libre du bras 72 comporte des premiers moyens associés aux moyens 20 de support et/ou des deuxièmes moyens 70 associés aux moyens 30 de moulage.

Toutefois, les changements d'outillages tels que les moyens 30 de moulage et/ou les moyens 20 de support ne constituent que des exemples non limitatifs d'opérations susceptibles d'être réalisées par le robot 50 sur l'une et/ou l'autre des unités 12, 14 de l'installation 10.

En effet, le robot 50 est encore susceptible d'intervenir pour réaliser d'autres opérations que celles de changements précités, notamment pour réaliser des opérations de maintenance.

Avantageusement, ledit au moins robot 50 est encore utilisé pour réaliser d'autres opérations dans la zone 60.

A titre d'exemple non limitatif, le robot 50 est utilisé dans la zone 60 pour manipuler des outillages que comportent les moyens 68 de stockage afin de réaliser des opérations sur les outillages tels que les moyens 30 de moulage et/ou les moyens 20 de support.

De préférence, des moyens de traitement (non représentés) associés auxdits outillages sont agencés dans la zone 60 pour décontaminer lesdits outillages en détruisant tout ou la majeure partie des agents pathogènes pouvant être présent sur ces outillages.

Avantageusement, les moyens de traitement sont aptes à réaliser une opération de décontamination par irradiation (par exemple par application d'un rayonnement ultraviolet) et/ou par voie chimique (par exemple par application de peroxyde d'hydrogène - H2O2).

De préférence, les opérations de traitement sont réalisées par le robot 50 et les moyens de traitement en temps masqué, c'est-à-dire alors que l'installation 10 est en mode de fonctionnement, dit de fabrication.

Avantageusement, ledit au moins un robot 50 intervient pour réaliser des opérations de décontamination des moyens 30 de moulage et/ou des moyens 20 de support destinés à être changés ensuite automatiquement par ledit robot 50.

Les figures 2 et 3 illustrent un exemple d'intervention du robot 50 sur la deuxième unité 14 (ou souffleuse) pour réaliser automatiquement des opérations de changement des moyens 30 de moulage de tout ou partie des dispositifs 26 de moulage.

Les moyens 68 de stockage agencés dans la zone 60 à côté du robot 50 comportent des moyens 30 de moulage destinés à être montés ou démontés dans les dispositifs 26 de moulage.

Avantageusement, lesdits moyens 30 de moulage ont été, tel que décrit précédemment, préalablement décontaminés par des moyens de traitement et ce avec l'assistance dudit au moins un robot 50.

Tel que représenté, le robot 50 est avantageusement un robot de type « 4 axes », en variante « 6 axes ».

Pour procéder à un changement de moyens 30 de moulage, l'installation 10 est arrêtée et basculée du mode de fonctionnement, dit de fabrication, vers le mode de fonctionnement, dit d'intervention.

Les moyens 56 d'obturation sont réalisés ici sous la forme de portes qui sont actionnées, de préférence automatiquement, pour provoquer leur déplacement de la position de fermeture vers la position d'ouverture.

La deuxième unité 14 est alors rendue accessible au bras 72 du robot 50 au travers de l'ouverture 58, grâce à quoi le robot 50 est apte à intervenir à travers la deuxième face F2 latérale verticale formée par la face externe de la paroi 40 de l'enceinte 32.

Les deuxièmes moyens 70 disposés à l'extrémité libre du bras 72 du robot 50 sont alors déplacés et positionnés dans l'espace pour venir se saisir des moyens 30 de moulage et les transporter jusqu'aux moyens 68 de stockage.

De nouveaux moyens 30 de moulage sont alors aptes à être saisis par les deuxièmes moyens 70 pour être montés dans le dispositif 26 de moulage en attente.

De préférence, les deuxième moyens 70 sont aptes à être séparés facilement du bras 72 du robot pour permettre le montage des premiers moyens (non représentés) d'intervention sur les moyens 20 de support des préformes dans le four 12 formant la première unité.

En variante, les premiers moyens et les deuxièmes moyens 70 peuvent coexister sur le bras 72 du robot 50.

Pour intervenir à travers la première face F1 latérale verticale, l'ouverture 54 doit être dégagée en procédant à l'ouverture, c'est à dire au déplacement des moyens 52 d'obturation de la position fermée vers la position ouverte.

## Revendications

1. Installation (10) pour la fabrication de récipients (12), notamment de bouteilles, à partir de préformes (16) en matière thermoplastique, ladite installation (10) comportant au moins :
- une première unité (12) pour le conditionnement thermique des préformes (16) qui comporte une première face (F1) latérale verticale ; et
- une deuxième unité (14) pour le façonnage des récipients (24) à partir desdites préformes (16) conditionnées thermiquement dans la première unité (12), qui comporte une deuxième face (F2) latérale verticale ;
**caractérisée en ce que** l'installation (10) comporte au moins un robot (50) qui est agencé en regard de la première face (F1) latérale verticale et en regard de la deuxième face (F2) latérale verticale pour intervenir sélectivement à travers la première face (F1) latérale verticale et/ou à travers la deuxième face (F2) latérale verticale afin de réaliser des opérations sur la première unité (12) et/ou la deuxième unité (14).

2. Installation selon la revendication 1, **caractérisée en ce que** ledit au moins un robot (50) comporte au moins des premiers moyens pour assister des opérations de changement de moyens (20) de support des préformes (16) appartenant à la première unité (12).

3. Installation selon l'une des revendications 1 ou 2, **caractérisée en ce que** ledit au moins un robot (50) comporte au moins des deuxièmes moyens (70) pour assister des opérations de changement de moyens (30) de moulage appartenant à la deuxième unité (14).

4. Installation selon les revendications 2 et 3, **caractérisée en ce que** ledit au moins un robot (50) comporte un bras (72) articulé qui est mobile dans l'espace suivant un trièdre (X, Y, Z).

5. Installation selon l'une des revendications 2 à 4, **caractérisée en ce que** lesdits premiers moyens et/ou les deuxièmes moyens dudit au moins un robot (50) sont commandés sélectivement pour réaliser automatiquement lesdites opérations de changement des moyens (30) de moulage et/ou lesdites opérations de changement des moyens (20) de support des préformes.

6. Installation selon l'une quelconque des revendications 1 à 5, **caractérisée en ce que** la première face (F1) latérale verticale et de la deuxième face (F2) latérale verticale s'étendent dans le prolongement l'une de l'autre.

7. Installation selon l'une quelconque des revendications 1 à 6, **caractérisée en ce que** la première face (F1) latérale verticale est la face externe de l'une (38) des parois verticales d'une enceinte (32) entourant ladite première unité (12) et **en ce que** la première face (F1) latérale verticale comporte des moyens (52) d'obturation qui sont montés mobiles entre une position fermée et une position ouverte, pour dégager sélectivement au moins une ouverture (54) permettant l'intervention dudit au moins un robot (50) sur la première unité (12).

8. Installation selon l'une quelconque des revendications 1 à 7, **caractérisée en ce que** la deuxième face (F2) latérale verticale est la face externe de l'une (40) des parois verticales d'une enceinte (32) entourant ladite deuxième unité (14) et **en ce que** la deuxième face (F2) latérale verticale comporte des moyens (56) d'obturation qui sont montés mobiles entre une position fermée et une position ouverte pour dégager sélectivement au moins une ouverture (58) permettant l'intervention dudit au moins un robot (50) sur la deuxième unité (14).

9. Installation selon les revendications 6 et 7, **caractérisée en ce que** ledit au moins un robot (50) est implanté dans une zone (60) délimitée par une enceinte (62), ladite enceinte (62) comportant au moins lesdites parois (38, 40) qui comportent respectivement la première face (F1) latérale verticale et la deuxième face (F2) latérale verticale.

10. Installation selon l'une quelconque des revendications précédentes, **caractérisée en ce que** ledit au moins un robot (50) est apte à se déplacer en regard de la première face (F1) latérale verticale et/ou de la deuxième face (F2) latérale verticale.

## Patentansprüche

1. Anlage (10) zum Fertigen von Behältern (12), insbesondere von Flaschen, aus Vorformlingen (16) aus thermoplastischem Material, wobei die Anlage (10) mindestens Folgendes aufweist:
- eine erste Einheit (12) zum thermischen Konditionieren der Vorformlinge (16), die eine erste vertikale Seitenfläche (F1) aufweist; und
- eine zweite Einheit (14) zum Formen der Behälter (24) aus den Vorformlingen (16), die in der ersten Einheit (12) thermisch konditioniert sind, die eine zweite vertikale Seitenfläche (F2) aufweist;
**dadurch gekennzeichnet, dass** die Anlage (10) mindestens einen Roboter (50) aufweist, der gegenüber der ersten vertikalen Seitenfläche (F1) und gegenüber der zweiten vertikalen Seitenfläche (F2) angeordnet ist, um selektiv durch die erste vertikale Seitenfläche (F1) und/oder durch die zweite vertikale Seitenfläche (F2) einzugreifen, um Operationen an der ersten Einheit (12) und/oder der zweiten Einheit (14) durchzuführen.

2. Anlage nach Anspruch 1, **dadurch gekennzeichnet, dass** der mindestens eine Roboter (50) mindestens erste Mittel aufweist, um Operationen des Wechselns von Stützmitteln (20) der Vorformlinge (16), die zu der ersten Einheit (12) gehören, zu unterstützen.

3. Anlage nach einem der Ansprüche 1 oder 2, **dadurch gekennzeichnet, dass** der mindestens eine Roboter (50) mindestens zweite Mittel (70) aufweist, um Operationen des Wechselns von Formungsmitteln (30), die zu der zweiten Einheit (14) gehören, zu unterstützen.

4. Anlage nach den Ansprüchen 2 und 3, **dadurch gekennzeichnet, dass** der mindestens eine Roboter (50) einen Gelenkarm (72) aufweist, der in dem Raum entlang eines Trieders (X, Y, Z) beweglich ist.

5. Anlage nach einem der Ansprüche 2 bis 4, **dadurch gekennzeichnet, dass** die ersten Mittel und/oder die zweiten Mittel des mindestens einen Roboters (50) selektiv gesteuert sind, um automatisch die Operationen des Wechselns der Formungsmittel (30) und/oder die Operationen des Wechselns der Stützmittel (20) der Vorformlinge durchzuführen.

6. Anlage nach einem der Ansprüche 1 bis 5, **dadurch gekennzeichnet, dass** sich die erste vertikale Seitenfläche (F1) und die zweite vertikale Seitenfläche (F2) in der Verlängerung voneinander erstrecken.

7. Anlage nach einem der Ansprüche 1 bis 6, **dadurch gekennzeichnet, dass** die erste vertikale Seitenfläche (F1) die Außenfläche von einer (38) der vertikalen Wände einer Umschließung (32) ist, die die erste Einheit (12) umgibt, und dass die erste vertikale Seitenfläche (F1) Verschlussmittel (52) aufweist, die beweglich zwischen einer geschlossenen Position und einer offenen Position montiert sind, um selektiv mindestens eine Öffnung (54) freizugeben, die den Eingriff von mindestens einem Roboter (50) an der ersten Einheit (12) ermöglicht.

8. Anlage nach einem der Ansprüche 1 bis 7, **dadurch gekennzeichnet, dass** die zweite vertikale Seitenfläche (F2) die Außenfläche von einer (40) der vertikalen Wände einer Umschließung (32) ist, die die zweite Einheit (14) umgibt, und dass die zweite vertikale Seitenfläche (F2) Verschlussmittel (56) aufweist, die beweglich zwischen einer geschlossenen Position und einer offenen Position montiert sind, um selektiv mindestens eine Öffnung (58) freizugeben, die den Eingriff von mindestens einem Roboter (50) an der zweiten Einheit (14) ermöglicht.

9. Anlage nach einem der Ansprüche 6 und 7, **dadurch gekennzeichnet, dass** der mindestens eine Roboter (50) in einem Bereich (60) angeordnet ist, der durch eine Umschließung (62) begrenzt ist, wobei die Umschließung (62) mindestens die Wände (38, 40) aufweist, die jeweils die erste vertikale Seitenfläche (F1) und die zweite vertikale Seitenfläche (F2) aufweisen.

10. Anlage nach einem der vorhergehenden Ansprüche, **dadurch gekennzeichnet, dass** der mindestens eine Roboter (50) geeignet ist, sich gegenüber der ersten vertikalen Seitenfläche (F1) und/oder der zweiten vertikalen Seitenfläche (F2) zu bewegen.

## Claims

1. Installation (10) for manufacturing containers (12), notably bottles, from preforms (16) of thermoplastic material, said installation (10) comprising at least:
- a first unit (12) for thermally conditioning the preforms (16) which comprises a first vertical lateral face (F1); and
- a second unit (14) for fashioning the containers (24) from said preforms (16) thermally conditioned in the first unit (12), which comprises a second vertical lateral face (F2);
**characterized in that** the installation (10) comprises at least one robot (50) which is arranged facing the first vertical lateral face (F1) and facing the second vertical lateral face (F2) to intervene selectively through the first vertical lateral face (F1) and/or through the second vertical lateral face (F2) in order to perform operations on the first unit (12) and/or the second unit (14).

2. Installation according to Claim 1, **characterized in that** said at least one robot (50) comprises at least a first means for assisting in operations to change means (20) for supporting preforms (16) belonging to the first unit (12).

3. Installation according to one of Claims 1 and 2, **characterized in that** said at least one robot (50) comprises at least second means (70) for assisting in operations to change moulding means (30) belonging to the second unit (14).

4. Installation according to Claims 2 and 3, **characterized in that** said at least one robot (50) comprises an articulated arm (72) which is mobile in space according to a trihedron (X, Y, Z).

5. Installation according to one of Claims 2 to 4, **characterized in that** said first means and/or said second means of said at least one robot (50) are controlled selectively to automatically perform said operations to change moulding means (30) and/or said operations to change means (20) for supporting the preforms.

6. Installation according to any one of Claims 1 to 5, **characterized in that** the first vertical lateral face (F1) and the second vertical lateral face (F2) extend in the extension of one another.

7. Installation according to any one of Claims 1 to 6, **characterized in that** the first vertical lateral face (F1) is the outer face of one (38) of the vertical walls of a chamber (32) surrounding said first unit (12) and **in that** the first vertical lateral face (F1) comprises blocking means (52) which are mounted to move between a closed position and an open position, to selectively clear at least one opening (54) allowing the intervention of said at least one robot (50) on the first unit (12).

8. Installation according to any one of Claims 1 to 7, **characterized in that** the second vertical lateral face (F2) is the outer face of one (40) of the vertical walls of a chamber (32) surrounding said second unit (14) and **in that** the second vertical lateral face (F2) comprises blocking means (56) which are mounted to move between a closed position and an open position to selectively clear at least one opening (58) allowing the intervention of said at least one robot (50) on the second unit (14).

9. Installation according to Claims 6 and 7, **characterized in that** said at least one robot (50) is located in a zone (60) delimited by a chamber (62), said chamber (62) comprising at least said walls (38, 40) which respectively comprise the first vertical lateral face (F1) and the second vertical lateral face (F2).

10. Installation according to any one of the preceding claims, **characterized in that** said at least one robot (50) is able to move facing the first vertical lateral face (F1) and/or the second vertical lateral face (F2).
